(19) Europäisches Patentamt
European Patent Office
Office européen des brevets

(11) EP 4 411 459 A1

(12) **EUROPEAN PATENT APPLICATION**
published in accordance with Art. 153(4) EPC

(43) Date of publication:
**07.08.2024 Bulletin 2024/32**

(21) Application number: **22876300.9**

(22) Date of filing: **28.09.2022**

(51) International Patent Classification (IPC):
***G02C 7/00*** *(2006.01)* ***C08L 71/00*** *(2006.01)*
***G02B 1/18*** *(2015.01)*

(52) Cooperative Patent Classification (CPC):
**C08L 71/00; G02B 1/18; G02C 7/00**

(86) International application number:
**PCT/JP2022/036083**

(87) International publication number:
**WO 2023/054434 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 JP 2021161404**

(71) Applicant: **Hoya Lens Thailand Ltd.**
**Pathumthani 12130 (TH)**

(72) Inventors:
- **SEKIGUCHI, Yusuke**
  **Tokyo 160-8347 (JP)**
- **KAWAKAMI, Hironori**
  **Tokyo 160-8347 (JP)**
- **ISHIKAWA, Masakazu**
  **Tokyo 160-8347 (JP)**

(74) Representative: **Hoffmann Eitle**
**Patent- und Rechtsanwälte PartmbB**
**Arabellastraße 30**
**81925 München (DE)**

(54) **LENS FOR EYEWEAR, ANTIFOULING AGENT COMPOSITION, AND METHOD FOR PRODUCING LENS FOR EYEWEAR**

(57) An embodiment of the present disclosure relates to a spectacle lens including an antifouling layer which is a condensate of an antifouling agent composition containing:
10 to 70 mass% of a compound (A) having a silyl group and a fluorinated alkyl group; and 30 to 90 mass% of a compound (B) having a silyl group at one end, a reactive group at the other end, and a polysiloxane chain structure.

[Figure 1]

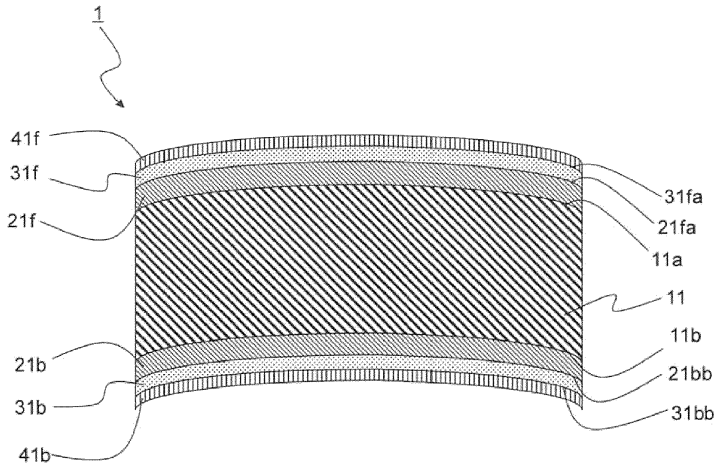


EP 4 411 459 A1

## Description

Technical Field

The present disclosure relates to a spectacle lens, an antifouling agent composition, and a method for manufacturing the spectacle lens.

Background Art

When a spectacle lens is used, dirt due to adhesion of hand marks, fingerprints, sweat, cosmetics, and the like is conspicuous. Therefore, an antifouling layer is formed on a surface in order to make the spectacle lens hardly stained or to wipe off dirt easily. For example, Patent Literature 1 describes a spectacle lens having a fluorine-containing antifouling film on a surface thereof, and having surface free energy of 10.0 $mJ/m^2$ or less and a base component of the surface free energy of 0.95 $mJ/m^2$ or less.

Citation List

Patent Literature

Patent Literature 1: JP 2018-004921 A

Summary of Invention

Technical Problem

In the spectacle lens having an antifouling layer disclosed in Patent Literature 1, it is easy to wipe off matters adhering to a surface thereof, such as a fingerprint. Meanwhile, there is a problem that durability is lowered.

An embodiment of the present disclosure relates to a spectacle lens having excellent wipeability and excellent durability, an antifouling agent composition, and a method for manufacturing the spectacle lens.

Solution to Problem

The present inventor has found that by vapor-depositing an antifouling agent composition containing a compound (B) having a silyl group at one end, a reactive group at the other end, and a polysiloxane chain structure in a predetermined range to form an antifouling layer, a spectacle lens having excellent wipeability and excellent durability can be obtained.

An embodiment of the present disclosure relates to a spectacle lens including an antifouling layer which is a condensate of an antifouling agent composition containing:

10 to 70 mass% of a compound (A) having a silyl group and a fluorinated alkyl group; and
30 to 90 mass% of a compound (B) having a silyl group at one end, a reactive group at the other end, and a polysiloxane chain structure.

An embodiment of the present disclosure relates to an antifouling agent composition containing:

10 to 70 mass% of a compound (A) having a silyl group and a fluorinated alkyl group; and
30 to 90 mass% of a compound (B) having a silyl group at one end, a reactive group at the other end, and a polysiloxane chain structure.

An embodiment of the present disclosure relates to a method for manufacturing a spectacle lens, the method including a step of forming an antifouling layer on a spectacle lens with an antifouling agent composition containing:

a compound (A) having a silyl group and a fluorinated alkyl group; and
a compound (B) having a silyl group at one end, a reactive group at the other end, and a silyloxy chain site.

Advantageous Effects of Invention

An embodiment of the present disclosure can provide a spectacle lens having excellent wipeability and excellent

durability, an antifouling agent composition, and a method for manufacturing the spectacle lens.

## Brief Description of Drawings

Fig. 1 is a schematic cross-sectional view of a spectacle lens 1 of the present embodiment.

## Description of Embodiments

Hereinafter, an embodiment according to the present disclosure will be described in detail, but the present disclosure is not limited thereto, and various modifications can be made without departing from the gist of the present disclosure. In the present specification, a numerical range indicated using "to" includes numerical values described before and after "to" as a minimum value and a maximum value, respectively.

Note that the content of each component in an antifouling agent composition is a value converted in a case where a silyl group is a trimethoxysilyl group when a component having the silyl group is contained.

### [Spectacle lens]

A spectacle lens of the present embodiment includes an antifouling layer which is a condensate of an antifouling agent composition containing:

10 to 70 mass% of a compound (A) having a silyl group and a fluorinated alkyl group; and
30 to 90 mass% of a compound (B) having a silyl group at one end, a reactive group at the other end, and a polysiloxane chain structure.

The spectacle lens of the present embodiment has excellent wipeability and excellent durability. A reason why the effect is obtained is not clear, but the antifouling agent composition contains the compound (A) with which an antifouling layer having excellent wipeability is formed and the compound (B) having a silyl group at one end and a reactive group at the other end. In the compound (A) and the compound (B), silyl groups are condensed during vapor deposition of the antifouling agent composition to form an antifouling layer. Furthermore, it is considered that the antifouling agent composition can enhance durability of an antifouling layer to be obtained by containing the compound (B) having a polysiloxane chain structure.

Fig. 1 is a schematic cross-sectional view of a spectacle lens 1 of the present embodiment. The spectacle lens 1 of the present embodiment includes a lens substrate 11, a hard coat layer 21f formed on an object-side surface 11a side of the lens substrate 11, a functional layer 31f formed on an object-side surface 21fa side of the hard coat layer 21f, and an antifouling layer 41f formed on an object-side surface 31fa side of the functional layer 31f.

In a case where the lens substrate 11 is a finish lens, the spectacle lens 1 of the present embodiment further includes a hard coat layer 21b formed on an eyeball-side surface 11b side of the lens substrate 11, a functional layer 31b formed on an eyeball-side surface 21bb side of the hard coat layer 21b, and an antifouling layer 41b formed on an eyeball-side surface 31bb side of the functional layer 31b.

Note that although not illustrated, an underlayer may be formed between the lens substrate 11 and the hard coat layer 21f or between the lens substrate 11 and the hard coat layer 21b.

Hereinafter, each layer in the spectacle lens of the present embodiment will be described.

#### <Antifouling layer>

The antifouling layer is a condensate of an antifouling agent composition. The condensate is obtained by condensation of at least a part of the antifouling agent composition.

The antifouling layer may be formed on the hard coat layer or on the functional layer, but is preferably formed on an antireflection layer. The antifouling layer is preferably located on an outermost surface.

#### (Antifouling agent composition)

The antifouling agent composition contains: 10 to 70 mass% of the compound (A) having a silyl group and a fluorinated alkyl group; and 30 to 90 mass% of the compound (B) having a silyl group at one end, a reactive group at the other end, and a polysiloxane chain structure.

(Compound (A))

By containing the compound (A) having a silyl group and a fluorinated alkyl group (hereinafter, also simply referred to as "compound (A)"), the antifouling agent composition can improve wipeability of an antifouling layer to be formed for a fingerprint and the like. The compound (A) is preferably linear.

Since the compound (A) has a silyl group, a condensation reaction proceeds during vapor deposition to form an antifouling layer. Examples of the silyl group include a trialkoxysilyl group such as a trimethoxysilyl group, a triethoxysilyl group, a tripropyloxysilyl group, or a trihexyloxysilyl group. The compound (A) preferably has a silyl group at a molecular end.

Since the compound (A) has a fluorinated alkyl group, wipeability of the antifouling layer for a fingerprint and the like can be improved. Examples of the fluorinated alkyl group include a perfluoroalkyl group. The number of carbon atoms in the fluorinated alkyl group is preferably 1 to 20, more preferably 1 to 10, and still more preferably 1 to 3. The compound (A) preferably has a fluorinated alkyl group at a molecular end.

The compound (A) preferably has a fluorinated alkylene oxide chain from a viewpoint of improving wipeability of the antifouling layer for a fingerprint and the like. Examples of the fluorinated alkylene oxide chain include a polyperfluoromethylene oxide group, a polyperfluoroethylene oxide group, and a polyperfluoropropylene oxide group. The number of units of the fluorinated alkylene oxide in the fluorinated alkylene oxide chain is preferably 10 to 100, more preferably 30 to 100, and still more preferably 50 to 90.

More specifically, the compound (A) is preferably a compound represented by formula (1):

$$(R^1O)_3Si\left(R^2\right)_n\left(OR^3\right)_m\left(ORf^4\right)_p ORf^5 \qquad (1)$$

in which

$R^1$s each independently represent a monovalent hydrocarbon group having 1 to 6 carbon atoms,
$R^2$s each independently represent a divalent hydrocarbon group having 1 to 6 carbon atoms, n is 0 or 1,
$R^3$s each independently represent a divalent hydrocarbon group having 1 to 4 carbon atoms, m is 0 to 10,
$Rf^4$s each independently represent a divalent fluorinated hydrocarbon group having 1 to 4 carbon atoms, p is 10 to 100, and
$Rf^5$ represents a fluorinated alkyl group having 1 to 20 carbon atoms.

Examples of $R^1$ include a methyl group, an ethyl group, a propyl group, and a hexyl group. Among these groups, a methyl group is preferable.

Examples of $R^2$ include a methanediyl group, an ethanediyl group, a propanediyl group, and a hexanediyl group.

Examples of $R^3$ include a methanediyl group, an ethanediyl group, and a propanediyl group. m is preferably an integer of 1 to 5, more preferably an integer of 1 to 3, and still more preferably 1.

Examples of $Rf^4$ include a difluoromethanediyl group, a tetrafluoroethanediyl group, and a hexafluoropropanediyl group.

p is preferably 10 to 100, more preferably 30 to 100, and still more preferably 50 to 90.

Examples of $Rf^5$ include a perfluoromethyl group, a perfluoropropyl group, a perfluorohexyl group, and a perfluorododecyl group.

$(ORf^4)_p$ in formula (1) is preferably a group represented by formula (f4-1):

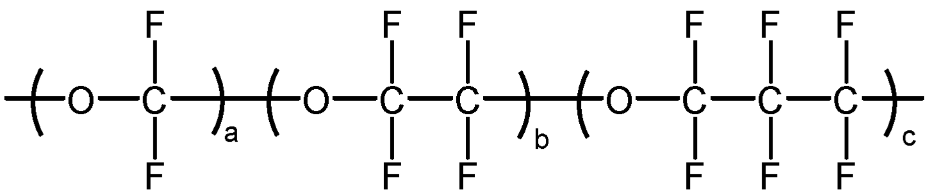

( f4-1 )

in which a is 0 to 100, b is 0 to 100, c is 0 to 100, and a + b + c is 10 to 200.
a is preferably 10 to 80, more preferably 20 to 70, and still more preferably 30 to 50.
a is preferably 10 to 80, more preferably 20 to 70, and still more preferably 30 to 50.
c is preferably 0 to 50, more preferably 0 to 30, and still more preferably 0 to 10.

a + b + c is preferably 30 to 180, more preferably 50 to 150, and still more preferably 60 to 120.

The content of the compound (A) is preferably 20 mass% to 75 mass%, more preferably 30 mass% to 70 mass%, and still more preferably 40 mass% to 60 mass% with respect to the solid content of the antifouling agent composition from a viewpoint of improving wipeability of an antifouling layer to be formed for a fingerprint and the like.

(Compound (B))

By containing the compound (B) having a silyl group at one end, a reactive group at the other end, and a polysiloxane chain structure (hereinafter, also simply referred to as "compound (B)"), the antifouling agent composition can enhance durability in a spectacle lens having an antifouling layer to be formed. The compound (B) is preferably linear.

Since the compound (B) has a silyl group, a condensation reaction proceeds to form an antifouling layer. Examples of the silyl group include a trialkoxysilyl group such as a trimethoxysilyl group, a triethoxysilyl group, a tripropyloxysilyl group, or a trihexyloxysilyl group.

By having a reactive group at the other end, the compound (B) can improve durability of an antifouling layer to be formed.

The reactive group is, for example, at least one selected from the group consisting of a hydroxy group, a vinyl group, a silyl group, an epoxy group, and an alkoxy group. Among these groups, a hydroxy group is preferable from a viewpoint of enhancing reactivity with the silyl groups in the compound (A) and the compound (B). The hydroxy group is preferably bonded to a carbon atom.

The compound (B) preferably has a fluorinated alkylene oxide chain from a viewpoint of improving wipeability of the antifouling layer for a fingerprint and the like. Examples of the fluorinated alkylene oxide chain include a polyperfluoromethylene oxide group, a polyperfluoroethylene oxide group, and a polyperfluoropropylene oxide group. The number of units of the fluorinated alkylene oxide in the fluorinated alkylene oxide chain is preferably 10 to 100, more preferably 30 to 100, and still more preferably 50 to 90.

The compound (B) has a siloxane chain structure. Examples of the siloxane chain include a polydimethylsiloxane group, a polydiethylsiloxane group, and a polydipropylsiloxane group. The number of units of siloxane in the siloxane chain is preferably 1 to 100, more preferably 10 to 900, and still more preferably 20 to 80.

More specifically, the compound (B) is a compound represented by formula (2):

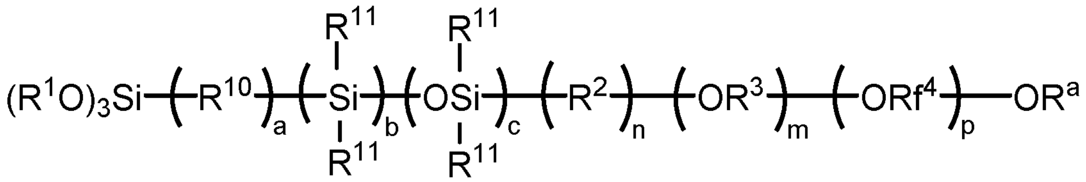 (2)

in which

$R^a$ represents a group containing a reactive group,

$R^{10}$s each independently represent a divalent hydrocarbon group having 1 to 4 carbon atoms, a is 0 to 10,

$R^{11}$s each independently represent a monovalent hydrocarbon group having 1 to 4 carbon atoms or an alkoxy group having 1 to 4 carbon atoms, b is 0 to 10, c is 0 to 10,

$R^1$s each independently represent a monovalent hydrocarbon group having 1 to 6 carbon atoms,

$R^2$s each independently represent a divalent hydrocarbon group having 1 to 6 carbon atoms, n is 0 or 1,

$R^3$s each independently represent a divalent hydrocarbon group having 1 to 4 carbon atoms, m is 0 to 10,

$Rf^4$s each independently represent a divalent fluorinated hydrocarbon group having 1 to 4 carbon atoms, and p is 10 to 100.

$R^1$, $R^2$, $R^3$, $Rf^4$, and p have the same meanings as in the above-described formula (1). $(ORf^4)_p$ in formula (2) is preferably the group represented by the above-described formula (f4-1). Definitions of substituents and the like of formula (f4-1) are similar to those described above.

Examples of $R^{10}$ include a methanediyl group, an ethanediyl group, and a propanediyl group.

Examples of $R^{11}$ include a methyl group, an ethyl group, a methoxy group, and an ethoxy group. Among these groups, a methyl group is preferable.

$R^a$ is preferably a group represented by formula (a1):

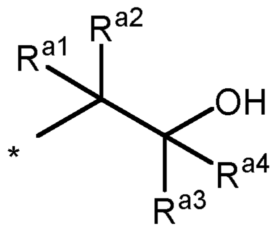

( a1 )

or

formula (a2):

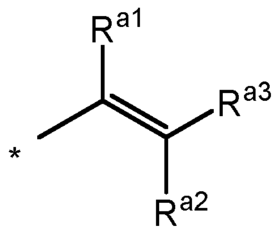

( a2 )

in which $R^{a1}$, $R^{a2}$, $R^{a3}$, and $R^{a4}$ each independently represent a hydrogen atom or an alkyl group having 1 to 3 carbon atoms.

$R^{a1}$, $R^{a2}$, $R^{a3}$, and $R^{a4}$ are preferably hydrogen atoms. $R^a$ is more preferably the group represented by formula (a1).

The content of the compound (B) is preferably 25 mass% to 80 mass%, more preferably 30 mass% to 70 mass%, and still more preferably 40 mass% to 60 mass% with respect to the solid content of the antifouling agent composition from a viewpoint of improving durability of an antifouling layer to be formed.

A content ratio between the compound (A) and the compound (B) in the antifouling agent composition (compound (A)/compound (B)) is preferably 0.1 to 8, more preferably 0.2 to 4, and still more preferably 0.5 to 2.

(Method for manufacturing spectacle lens - Formation of antifouling layer -)

A method for manufacturing a spectacle lens according to the present embodiment includes a step of forming an antifouling layer on a spectacle lens with an antifouling agent composition containing the compound (A) and the compound (B). The antifouling layer is obtained by, for example, vapor deposition or coating of the antifouling agent composition, and is preferably obtained by vapor deposition.

The vapor deposition is performed by, for example, vacuum vapor deposition. In the vacuum vapor deposition, a heating temperature during the vapor deposition is preferably 400°C or higher, more preferably 550°C or higher, still more preferably 600°C or higher, and further still more preferably 650°C or higher. The heating temperature related to the vapor deposition refers to a temperature at which pellets and the like impregnated with the antifouling agent composition are heated during the vapor deposition. The heating temperature in the vacuum vapor deposition is preferably 400°C or higher, for example, in a range of 400°C to 1000°C. Note that the vacuum vapor deposition is preferably performed in a vapor deposition space controlled to a degree of vacuum of $3.0 \times 10^{-2}$ Pa or less.

For heating in the vapor deposition, for example, a halogen heater, resistance heating, an electron gun, or the like can be used, and among these, when the vapor deposition is performed by heating using an electron gun, a thin film with high accuracy can be formed. Power of the electron gun varies depending on a substance to be used, a vapor deposition apparatus, a degree of vacuum, and an irradiation area, but preferable conditions are an acceleration voltage of about 6 kV and an applied current of about 5 mA to 40 mA.

Vapor deposition time is preferably, for example, 1000 seconds or less, and more preferably 800 seconds or less or 600 seconds or less. By performing vapor deposition in such a time, vapor deposition can be performed almost simultaneously even when a water-repellent material containing a plurality of components having slightly different vapor deposition initiation temperatures is used, and a uniform film can be obtained.

The vapor deposition is preferably performed using a porous material impregnated with the antifouling agent composition.

As the porous material, it is preferable to use a sintered filter obtained by sintering a fused silica porous body or a metal powder having high thermal conductivity, such as copper or stainless steel. The size of a mesh of the sintered

filter is suitably 40 um to 200 um, and preferably 80 um to 120 um from a viewpoint of obtaining an appropriate vapor deposition rate.

In addition, pellets obtained by filling a copper container with steel wool are also suitably used.

The antifouling agent composition may be used as it is or as a solution by impregnating the porous material with the antifouling agent composition.

In order to form the antifouling layer on the spectacle lens by coating, a method for dissolving a fluorine-containing silane compound in an organic solvent and applying the resulting solution to a surface of the spectacle lens can be adopted.

Examples of the coating method include a dipping method, a spin coating method, a spraying method, a flow method, a doctor blade method, roll coating, gravure coating, and curtain flow coating.

After the antifouling layer is formed, a heating step may be included. In the heating step, a reaction between the antifouling agent composition and the surface of the spectacle lens is caused to proceed. By performing the heat treatment, it is possible to suppress a decrease in water repellency due to physical and chemical loads in daily use such as wiping of the surface of the spectacle lens and adhesion of a detergent, and to enhance durability.

A temperature of the heat treatment is preferably 40°C to 90°C, more preferably 50°C to 80°C, and still more preferably 55°C to 70°C.

Time for the heat treatment is not particularly limited, but is, for example, 0.5 hours to 10 hours.

The thickness of the antifouling layer is preferably 1 nm to 5 um, more preferably 1 nm to 100 nm, and still more preferably 2 nm to 10 nm.

(Surface free energy)

A total value of surface free energy of the antifouling layer is preferably more than 10.0 mJ/m$^2$, and more preferably 10.1 mJ/m$^2$ or more. An upper limit of the total value of the surface free energy of the antifouling layer is not particularly limited, but may be, for example, 12.0 mJ/m$^2$ or less, 11.5 mJ/m$^2$ or less, or 11.0 mJ/m$^2$ or less.

A base component of the surface free energy of the antifouling layer is preferably more than 0.95 mJ/m$^2$, more preferably 0.97 mJ/m$^2$ or more, and still more preferably 0.99 mJ/m$^2$ or more. An upper limit of the base component of the surface free energy of the antifouling layer is not particularly limited, but may be, for example, 3.0 mJ/m$^2$ or less, 2.0 mJ/m$^2$ or less, or 11.5 mJ/m$^2$ or less.

The surface free energy and the base component of the surface free energy in the present disclosure are values determined by an acid-base theory.

As a liquid for contact angle measurement, water, diiodomethane, and ethylene glycol are used, 2 μL of each of the liquids is dropped onto a surface of a substrate, and a contact angle is measured by "DM700" manufactured by Kyowa Interface Science Co., Ltd. From the measured contact angle, the surface free energy and component values constituting the surface free energy are determined by a surface free energy calculation formula based on the acid-base theory.

The surface free energy and the base component of the surface free energy can be set to the above ranges, for example, by adjusting conditions for forming the antifouling agent composition and the antifouling layer.

Next, each component of the spectacle lens according to the embodiment will be described.

<Lens substrate>

The lens substrate may be either a finish lens or a semi-finish lens.

A surface shape of the lens substrate is not particularly limited, and may be any of a flat surface, a convex surface, a concave surface, and the like.

The lens substrate may be used for any of a monofocal lens, a multifocal lens, a progressive addition lens, and the like. For example, in a progressive addition lens, a near portion region (near portion) and a corridor region (intermediate region) are included in the above-described lower region and a distance portion region (distance portion) is included in the upper region.

As the lens substrate, a colorless material is usually used, but a colored material can also be used as long as transparency is not impaired.

The lens substrate is preferably a meniscus lens substrate. By containing the above-described compound 1, the meniscus lens substrate can suppress astigmatism.

The optical center thickness of the lens substrate is not particularly limited, but is preferably 0.5 mm to 5.0 mm, more preferably 0.5 mm to 3.0 mm, and still more preferably 0.5 mm to 2.0 mm.

The diameter of the lens substrate is not particularly limited, but is usually about 50 mm to 100 mm.

A refractive index ne of the lens substrate is preferably 1.53 or more, more preferably 1.55 or more, and still more preferably 1.60 or more.

Note that an upper limit of the refractive index ne of the lens substrate is not particularly limited, but may be, for example, 1.80 or less.

Examples of a resin of the lens substrate include a urethane-based resin, an episulfide resin, a polycarbonate resin, and an acrylic resin.

The resin is preferably at least one selected from the group consisting of a polythiourethane resin, a polysulfide resin, and a polyurethane resin, and more preferably at least one selected from the group consisting of a polythiourethane resin and a polysulfide resin.

(Method for manufacturing lens substrate)

The lens substrate is obtained by, for example, a manufacturing method including:

a step of curing the above-described polymerizable composition; and
a step of annealing a cured resin, although not being limited thereto.

The polymerization is preferably performed by a cast polymerization method. The lens substrate is obtained, for example, by casting the polymerizable composition into a molding die combining a glass or metal mold and a tape or a gasket, and performing polymerization.

A polymerization condition can be set appropriately according to the polymerizable composition. A polymerization initiation temperature is preferably 0°C or higher, more preferably 10°C or higher, and preferably 50°C or lower, more preferably 40°C or lower. Preferably, the temperature is raised from the polymerization initiation temperature, and then heating is performed to perform curing formation. For example, the maximum temperature at heating is usually 110°C or higher and 130°C or lower.

After completion of the polymerization, the lens substrate may be released from the die and may be annealed. A temperature of the annealing treatment is preferably 100 to 150°C.

<Hard coat layer>

The hard coat layer is, for example, a cured film formed of a curable composition containing an inorganic oxide and a silicon compound. The curable composition preferably further contains a polyfunctional epoxy compound.

Examples of the inorganic oxide include silicon oxide, aluminum oxide, titanium oxide, zirconium oxide, tungsten oxide, zinc oxide, tin oxide, beryllium oxide, antimony oxide, and a composite oxide of two or more of these inorganic oxides. These inorganic oxides may be used singly or in combination of two or more kinds thereof. Among these inorganic oxides, silicon oxide is preferable. Note that colloidal silica may be used as the inorganic oxide.

The content of the inorganic oxide is preferably 20 mass% or more and 80 mass% or less, more preferably 25 mass% or more and 70 mass% or less, and still more preferably 25 mass% or more and 50 mass% or less in the solid content of the curable composition.

Examples of the silicon compound include a silicon compound having a hydrolyzable group such as an alkoxy group. The silicon compound is preferably a silane coupling agent having an organic group bonded to a silicon atom and a hydrolyzable group. The organic group bonded to a silicon atom is preferably an organic group having a functional group such as an epoxy group such as a glycidoxy group, a vinyl group, a methacryloxy group, an acryloxy group, a mercapto group, an amino group, or a phenyl group, and more preferably an organic group having an epoxy group. Note that the silicon compound may have an alkyl group bonded to silicon.

Examples of commercially available products of the above-described silane coupling agent include KBM-303, KBM-402, KBM-403, KBE-402, KBE-403, KBM-1403, KBM-502, KBM-503, KBE-502, KBE-503, KBM-5103, KBM-602, KBM-603, KBM-903, KBE-903, KBE-9103, KBM-573, KBM-575, KBM-9659, KBE-585, KBM-802, KBM-803, KBE-846, and KBE-9007 (trade names) manufactured by Shin-Etsu Chemical Co., Ltd.

The content of the silicon compound is preferably 20 mass% to 90 mass%, more preferably 30 mass% to 75 mass%, and still more preferably 50 mass% to 75 mass% in the solid content of the curable composition.

The polyfunctional epoxy compound is a polyfunctional epoxy compound containing two or more epoxy groups in one molecule, and more preferably a polyfunctional epoxy compound containing two or three epoxy groups in one molecule. Examples of commercially available products of the polyfunctional epoxy compound include EX-201, EX-211, EX-212, EX-252, EX-313, EX-314, EX-321, EX-411, EX-421, EX-512, EX-521, EX-611, EX-612, EX-614, and EX-614B, which are "Denacol (trade name)" series manufactured by Nagase ChemteX Corporation.

The content of the polyfunctional epoxy compound is preferably 0 mass% to 50 mass%, more preferably 10 mass% to 40 mass%, and still more preferably 15 mass% to 30 mass% in the solid content of the curable composition.

The above-described curable composition can be prepared by mixing optional components such as an organic solvent, a leveling agent, and a curing catalyst as necessary in addition to the above-described components.

The above-described hard coat layer can be formed by applying the curable composition onto a substrate and subjecting the curable composition to a curing treatment (thermal curing, photocuring, or the like). As a means for applying the curable composition, a usually performed method such as a dipping method, a spin coating method, or a spraying method can be applied. The curing treatment is usually performed by heating the curable composition containing a polyfunctional epoxy compound. The heat curing treatment can be performed, for example, by placing the lens coated with the above-described curable composition in an environment of an atmospheric temperature of 50°C to 150°C for about 30 minutes to three hours.

<Underlayer>

The above-described underlayer can be formed of, for example, an aqueous resin composition containing at least one kind of resin particle selected from the group consisting of a polyurethane resin, an acrylic resin, an epoxy resin, and the like.

As the above-described aqueous resin composition, a commercially available aqueous polyurethane can be used as it is, or used by being diluted with an aqueous solvent as necessary. Examples of the commercially available aqueous polyurethane include "EVAFANOL (trade name)" series manufactured by Nikka Chemical Co., Ltd., "SUPERFLEX (trade name)" series manufactured by DKS Co., Ltd., "ADEKA BONTIGHTER (trade name)" series manufactured by ADEKA Corporation, "OLESTER (trade name)" series manufactured by Mitsui Chemicals, Inc., "VONDIC (trade name)" series and "HYDRAN (trade name)" series manufactured by DIC Corporation, "Impranil (trade name)" series manufactured by Bayer AG, "SOFRANATE (trade name)" series manufactured by Nihon Soflan, "POIZ (trade name)" series manufactured by Kao Corporation, "SANPRENE (trade name)" series manufactured by Sanyo Chemical Industries, Ltd., "IZELAX (trade name)" series manufactured by Hodogaya Chemical Co., Ltd., "NeoRez (trade name)" series manufactured by Zeneca Group PLC.

The underlayer can be formed, for example, by applying the above-described aqueous resin composition to a surface of a substrate and drying the aqueous resin composition.

<Functional layer>

Examples of the above-described functional layer include an antireflection layer, an ultraviolet absorbing layer, an infrared absorbing layer, a photochromic layer, an antistatic layer, and an antifogging layer. These functional layers may be used singly or in combination of two or more kinds thereof. A known technique related to a spectacle lens can be applied to these functional layers. Among these functional layers, a functional layer having an antireflection layer is preferable.

(Antireflection layer)

The antireflection layer includes, for example, a low refractive index layer and a high refractive index layer which are alternately disposed. The number of layers included in the antireflection layer is preferably 4 to 11, and more preferably 5 to 8.

A refractive index of the low refractive index layer is preferably 1.35 to 1.80 and more preferably 1.45 to 1.50 at a wavelength of 500 nm to 550 nm. The low refractive index layer is made of an inorganic oxide, and preferably made of silicon oxide.

A refractive index of the high refractive index layer is preferably 1.90 to 2.60 and more preferably 2.00 to 2.40 at a wavelength of 500 nm to 550 nm. The high refractive index layer is made of, for example, an inorganic oxide. The inorganic oxide used for the high refractive index layer is preferably at least one selected from the group consisting of zirconium oxide, tantalum oxide, yttrium oxide, titanium oxide, niobium oxide, and aluminum oxide, and more preferably at least one selected from the group consisting of zirconium oxide and tantalum oxide.

The antireflection layer can be formed by alternately building up the low refractive index layer and the high refractive index layer by a vacuum vapor deposition method.

As described above, the present disclosure provides a spectacle lens having excellent wipeability and excellent durability, an antifouling agent composition, and a method for manufacturing the spectacle lens.

The present specification discloses the following embodiments.

<1>
A spectacle lens including an antifouling layer which is a condensate of an antifouling agent composition containing:

10 to 70 mass% of a compound (A) having a silyl group and a fluorinated alkyl group; and
30 to 90 mass% of a compound (B) having a silyl group at one end, a reactive group at the other end, and a

polysiloxane chain structure.

<2>

The spectacle lens according to <1>, in which the compound (A) has the silyl group at one end and the fluorinated alkyl group at the other end.

<3>

The spectacle lens according to <1> or <2>, in which the compound (A) is linear.

<4>

The spectacle lens according to any one of <1> to <3>, in which

the compound (A) is represented by formula (1):

$$(R^1O)_3Si-(R^2)_n-(OR^3)_m-(ORf^4)_p-ORf^5 \quad (1)$$

in which

$R^1$s each independently represent a monovalent hydrocarbon group having 1 to 6 carbon atoms,

$R^2$s each independently represent a divalent hydrocarbon group having 1 to 6 carbon atoms, n is 0 or 1,

$R^3$s each independently represent a divalent hydrocarbon group having 1 to 4 carbon atoms, m is 0 to 10,

$Rf^4$s each independently represent a divalent fluorinated hydrocarbon group having 1 to 4 carbon atoms, p is 10 to 100, and

$Rf^5$ represents a fluorinated alkyl group having 1 to 20 carbon atoms.

<5>

The spectacle lens according to <4>, in which

$(ORf^4)_p$ in formula (1) is a group represented by formula (f4-1):

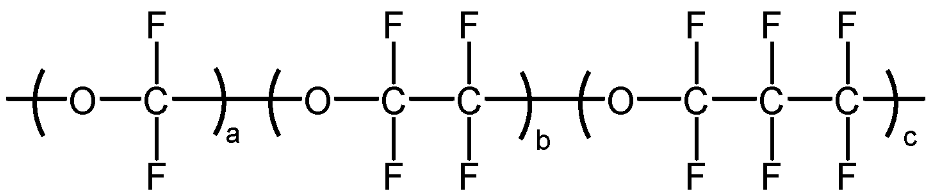
( f4-1 )

in which a is 0 to 100, b is 0 to 100, c is 0 to 100, and a + b + c is 10 to 200.

<6>

The spectacle lens according to any one of <1> to <5>, in which the compound (B) is linear.

<7>

The spectacle lens according to any one of <1> to <6>, in which the compound (B) is represented by formula (2):

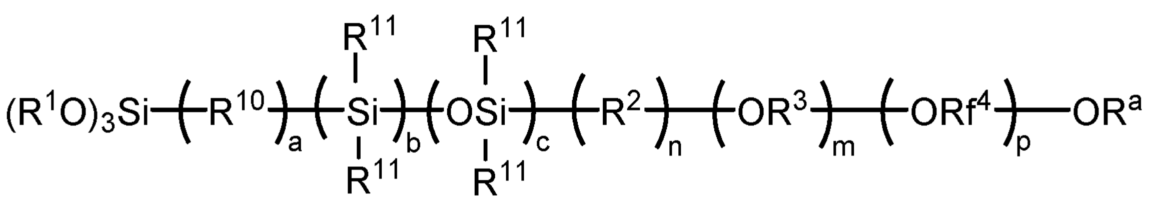
( 2 )

in which

$R^a$ represents a reactive group,

$R^{10}$s each independently represent a divalent hydrocarbon group having 1 to 4 carbon atoms, a is 0 to 10,

$R^{11}$s each independently represent a monovalent hydrocarbon group having 1 to 4 carbon atoms or an alkoxy group having 1 to 4 carbon atoms, b is 0 to 10, c is 1 to 100,

$R^1$s each independently represent a monovalent hydrocarbon group having 1 to 6 carbon atoms,
$R^2$s each independently represent a divalent hydrocarbon group having 1 to 6 carbon atoms, n is 0 or 1,
$R^3$s each independently represent a divalent hydrocarbon group having 1 to 4 carbon atoms, m is 0 to 10,
$Rf^4$s each independently represent a divalent fluorinated hydrocarbon group having 1 to 4 carbon atoms, and p is 10 to 100.

<8>
The spectacle lens according to any one of <1> to <7>, in which the reactive group is at least one selected from the group consisting of a hydroxy group, a vinyl group, a silyl group, an epoxy group, and an alkoxy group.
<9> The spectacle lens according to <8>, in which
the $R^a$ is a group represented by formula (a1):

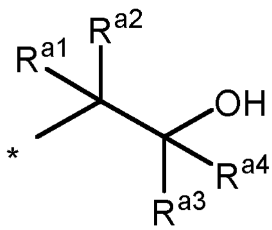
( a1 )

or
formula (a2):

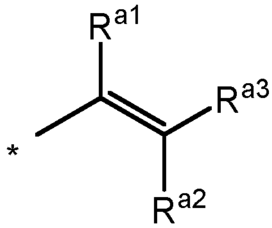
( a2 )

in which $R^{a1}$, $R^{a2}$, $R^{a3}$, and $R^{a4}$ each independently represent a hydrogen atom or an alkyl group having 1 to 3 carbon atoms.
<10> The spectacle lens according to any one of <7> to <9>, in which
$(ORf^4)_p$ in formula (2) is a group represented by formula (f4-1):

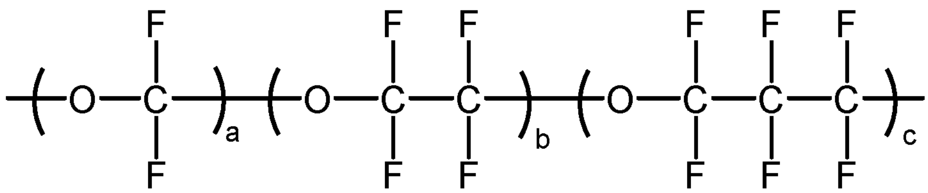
( f4-1 )

in which a is 0 to 100, b is 0 to 100, c is 0 to 100, and a + b + c is 10 to 200.
<11>
The spectacle lens according to any one of <1> to <10>, in which a total value of surface free energy of the antifouling layer is more than 10.0 mJ/$m^2$.
<12>
The spectacle lens according to any one of <1> to <11>, in which a base component of surface free energy of the antifouling layer is more than 0.95 mJ/$m^2$.
<13>
An antifouling agent composition containing:

10 to 70 mass% of a compound (A) having a silyl group and a fluorinated alkyl group; and
30 to 90 mass% of a compound (B) having a silyl group at one end, a reactive group at the other end, and a

polysiloxane chain structure.

<14>
A method for manufacturing a spectacle lens, the method including a step of forming an antifouling layer on a spectacle lens with an antifouling agent composition containing:

a compound (A) having a silyl group and a fluorinated alkyl group; and
a compound (B) having a silyl group at one end, a reactive group at the other end, and a silyloxy chain site.

Examples

Hereinafter, the present embodiment will be described more specifically using Examples and Comparative Examples. Note that the present invention is not limited by the following Examples at all.

[Preparation of antifouling agent composition and preparation of antifouling agent pellets]

[Manufacturing Example 1 and Comparative Manufacturing Examples 1 to 3]

A composition obtained by mixing the compounds presented in Table 1 was made into a 20 mass% solution, and metal pellets in which a copper container was filled with steel wool was impregnated with the solution such that the solid content after solvent evaporation was 15 mg. After impregnation with the 20 mass% solution, the solvent was evaporated by heating in an oven set at 80°C for 20 minutes to obtain a solid content of 15 mg.

Table 1

| | | | Manufacturing Example 1 | Comparative Manufacturing Example 1 | Comparative Manufacturing Example 2 | Comparative Manufacturing Example 3 |
|---|---|---|---|---|---|---|
| Antifouling agent composition | Compound (A) | Compound A-1 | 50 | 100 | - | 80 |
| | Compound (B) | Compound B-1 | 50 | - | 100 | 20 |

The values are represented by parts by mass.

Abbreviations in Table 1 are as described below.

Compound A-1: Compound (A) represented by formula (1) ($R^1$ = $-CH_3$, $R^2$ = $-C_3H_6-$, n = 1, $R^3$ = $-C_3H_6-$, $Rf^4$ = $(OCF_2)_{38}(OCF_2CF_2)_{40}(OCF_2CF_2CF_2)_{0.5}$, $Rf^5$ = $-CF_3$.)

Compound B-1: Compound (B) represented by formula (2) ($R^a$ = $-C_2H_4OH$, $R^{10}$ = $-C_3H_6-$, a = 1, $R^{11}$ = $-CH_3$, b = 1, c = 20, $R^1$ = $-CH_3$, $R^2$ = $-C_3H_6-$, n = 1, $R^3$ = $-C_3H_6-$, $Rf^4$ = $((OCF_2)_{38}(OCF_2CF_2)_{40}(OCF_2CF_2CF_2)_{0.5}$.)

[Example 1 and Comparative Examples 1 to 3

(Vapor deposition of antifouling agent on spectacle lens)

A liquid obtained by adding 90 parts by mass of colloidal silica (Snowtex-40, Nissan Chemical Industries, Ltd.), 81.6 parts by mass of methyltrimethoxysilane as an organosilicon compound, 176 parts by mass of $\gamma$-glycidoxypropyltrimethoxysilane, 2.0 parts by mass of 0.5 N hydrochloric acid, 20 parts by mass of acetic acid, and 90 parts by mass of water to a glass container was stirred at room temperature for eight hours and then left at room temperature for 16 hours to obtain a hydrolysis solution. To this solution, 120 parts by mass of isopropyl alcohol, 120 parts by mass of n-butyl alcohol, 16 parts by mass of aluminum acetylacetone, 0.2 parts by mass of a silicone-based surfactant, and 0.1 parts by mass of an ultraviolet absorber were added, and the mixture was stirred at room temperature for eight hours and then aged at room temperature for 24 hours to obtain a coating liquid. A plastic lens substrate (manufactured by HOYA CORPORATION, trade name EYAS, prescription S 0.00, C 0.00, plastic spectacle lens) pretreated with an alkali aqueous solution was immersed in the above-described coating liquid, and after completion of the immersion, the plastic lens pulled up at a pulling speed of 20 cm/min was heated at 120°C for two hours to form a cured film, whereby a hard coat layer (referred to as layer A) was formed. Next, an antireflection layer in which silica and zirconia were alternately layered was formed on the hard coat layer by a vacuum vapor deposition method.

After the antireflection layer was vapor-deposited, an ion gun treatment was performed in order to activate a surface. The ion gun treatment was performed under the following conditions.

Acceleration voltage: 500 V
Acceleration current: 230 mA
Introduced gas: oxygen (20 sccm)
Ion irradiation time: 30 seconds

Thereafter, a dome in which a substrate was set was moved to a chamber in which an antifouling agent was to be vapor-deposited. In the chamber, pellets impregnated with the antifouling agent prepared in 1 were set on a halogen heater heating table. The pellets were heated with a halogen heater, and the antifouling agent in the pellets was vapor-deposited. A reached temperature during heating was about 600°C.

The substrate on which the antifouling agent had been vapor-deposited was taken out, put in an oven set at 60°C, and held for four hours for annealing.

The obtained spectacle lenses were evaluated by the following method. Tables 2 and 3 present the results.

[Wipeability test]

Artificial sebum was prepared with the following composition.

Cholesterol: 2 mass%
Squalene: 2 mass%
Palmitic acid: 2 mass%
Triolein: 4 mass%
Ethanol: 90 mass%

This was applied onto a glass substrate by spin coating. A silicon plug that had been roughened be being polished with #240 abrasive paper in advance was pressed against the glass substrate with a load of 2 kg to attach the artificial sebum to an end of the silicon plug.

Next, the silicon plug was pressed against a spectacle lens to be evaluated with a load of 2 kg. Note that, here, the spectacle lenses obtained above were used as the spectacle lens for evaluation.

Next, the spectacle lens was set in a frictional wear tester. This frictional wear tester is designed such that a

substrate to be evaluated can be subjected to a sliding test with a constant load, a constant speed, and a constant stroke. As a medium (sliding terminal) used for the test, a medium obtained by winding lens-cleaning paper around an eraser was used.

This was attached to the frictional wear tester and pressed against the spectacle lens for evaluation with a load of 500 g, a stroke was set to 30 mm, and the spectacle lens was wiped by being slid in a reciprocating manner ten times. A wiped state of the artificial sebum was examined every ten times the spectacle lens was slid in a reciprocating manner.

The wiped state was quantified by measuring a haze value. Note that when the haze was 1 or less, a fingerprint was hardly noticeable.

[Durability test]

(Method for measuring contact angle)

Using a fully automatic contact angle meter "DM-700" (Kyowa Interface Science Co., Ltd.), a water droplet having a diameter of 2 mm was made at a needle tip at 25°C, and the water droplet was brought in touch with an uppermost portion of a convex surface of the spectacle lens to form a droplet. An angle between the droplet generated at this time and the surface was measured and defined as a contact angle. A contact angle $\theta$ is determined by the following formula when a radius of the water droplet (a radius of a portion where the water droplet is in contact with the surface of the spectacle lens) is represented by r and the height of the water droplet is represented by h.

$$\theta = 2 \times \tan^{-1} (h/r)$$

Note that the contact angle was measured within 10 seconds after the water droplet was brought into contact with the spectacle lens in order to minimize a measurement error due to evaporation of water.

(Reciprocating friction test)

Lens wiping paper "Dusper" (manufactured by Ozu Corporation) was wound around an eraser cut into 23 mm × 27 mm, and the eraser with the lens wiping paper was attached to a reciprocating frictional wear tester "Tribogear 30S" (manufactured by Yamato Scientific Co., Ltd.). A load of 2 kg was applied thereto, a contact angle was measured by a method similar to that used in measurement of the initial contact angle every time the spectacle lens surface for which the initial contact angle had been measured was rubbed 600 times, and the spectacle lens surface was rubbed 3000 times in total. Thereafter, every time the spectacle lens surface was rubbed 1000 times, a contact angle was measured by a method similar to that used in measurement of the initial contact angle, and the spectacle lens surface was rubbed until the total number of times of wiping reached 5,000.

Wiping resistance was evaluated according to the following criteria.

A: Even when the number of times of wiping is 4,000 or more, a contact angle decreased from the initial contact angle is less than 5°.

B: When the number of times of wiping is 3,000 or more and less than 4,000, a contact angle decreased from the initial contact angle is 5° or less.

C: When the number of times of wiping is 2,400 or more and less than 3,000, a contact angle decreased from the initial contact angle is 5° or less.

D: When the number of times of wiping is less than 2,400, a contact angle decreased from the initial contact angle is 5° or less.

Table 2

| Examples | Antifouling agent composition | Wiping test | | | | | |
|---|---|---|---|---|---|---|---|
| | | Number of times of wiping | 10 | 20 | 30 | 40 | 50 |
| Example 1 | Manufacturing Example 1 | Haze value | 87.42% | 96.61% | 98.09% | 98.86% | 99.29% |
| Comparative Example 1 | Comparative Manufacturing Example 1 | | 84.94% | 90.95% | 95.07% | 96.70% | 97.55% |
| Comparative Example 2 | Comparative Manufacturing Example 2 | | 64.25% | 77.63% | 86.58% | 93.03% | 95.41% |
| Comparative Example 3 | Comparative Manufacturing Example 3 | | 92.09% | 97.63% | 98.83% | 99.27% | 99.47% |

Table 3

| Examples | Antifouling agent composition | Durability test |
|---|---|---|
| Example 1 | Manufacturing Example 1 | A |
| Comparative Example 1 | Comparative Manufacturing Example 1 | D |
| Comparative Example 3 | Comparative Manufacturing Example 3 | D |

[Measurement of surface free energy]

For measurement of surface free energy characteristics, "DM700" manufactured by Kyowa Interface Science Co., Ltd. was used. A contact angle of a surface of an antifouling layer formed on a spectacle lens was measured. As a liquid for contact angle measurement, water, diiodomethane, and ethylene glycol were used. 2 $\mu$L of each of the liquids was dropped onto a surface of the spectacle lens, and the contact angle was measured. From the measured contact angle, surface free energy and component values constituting the surface free energy were determined by a surface free energy calculation formula based on an acid-base theory. Table 4 represents the results.

Table 4

| Examples | Antifouling agent composition | Surface free energy (mJ/m$^2$) | |
|---|---|---|---|
| | | Base component | Total value |
| Example 1 | Manufacturing Example 1 | 1.4 | 10.4 |
| Comparative Example 1 | Comparative Manufacturing Example 1 | 0.7 | 9.7 |
| Comparative Example 3 | Comparative Manufacturing Example 3 | 0.99 | 10 |

As described above, it is found from the results of Example and Comparative Examples that the present embodiment provides a spectacle lens having excellent wipeability and excellent durability, an antifouling agent composition, and a method for manufacturing the spectacle lens.

Reference Signs List

| | |
|---|---|
| 1 | Spectacle lens |
| 11 | Substrate for spectacle lens |

| | |
|---|---|
| 11a, 21fa, 31fa | Object-side surface |
| 11b, 21bb, 31bb | Eyeball-side surface |
| 21f, 21b | Hard coat layer |
| 31f, 31b | Functional layer |
| 41f, 41b | Antifouling layer |

**Claims**

**1.** A spectacle lens comprising an antifouling layer which is a condensate of an antifouling agent composition comprising:

10 to 70 mass% of a compound (A) having a silyl group and a fluorinated alkyl group; and
30 to 90 mass% of a compound (B) having a silyl group at one end, a reactive group at the other end, and a polysiloxane chain structure.

**2.** The spectacle lens according to claim 1, wherein the compound (A) has the silyl group at one end and the fluorinated alkyl group at the other end.

**3.** The spectacle lens according to claim 1, wherein the compound (A) is represented by formula (1):

$$(R^1O)_3Si\left(R^2\right)_n\left(OR^3\right)_m\left(ORf^4\right)_p ORf^5 \qquad (1)$$

in which
$R^1$s each independently represent a monovalent hydrocarbon group having 1 to 6 carbon atoms,
$R^2$s each independently represent a divalent hydrocarbon group having 1 to 6 carbon atoms, n is 0 or 1,
$R^3$s each independently represent a divalent hydrocarbon group having 1 to 4 carbon atoms, m is 0 to 10,
$Rf^4$s each independently represent a divalent fluorinated hydrocarbon group having 1 to 4 carbon atoms, p is 10 to 100, and
$Rf^5$ represents a fluorinated alkyl group having 1 to 20 carbon atoms.

**4.** The spectacle lens according to claim 3, wherein $(ORf^4)_p$ in formula (1) is a group represented by formula (f4-1):

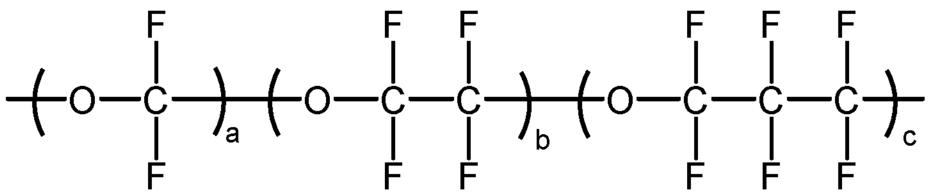

( f4-1 )

in which a is 0 to 100, b is 0 to 100, c is 0 to 100, and a + b + c is 10 to 200.

**5.** The spectacle lens according to claim 1, wherein the compound (B) is represented by formula (2):

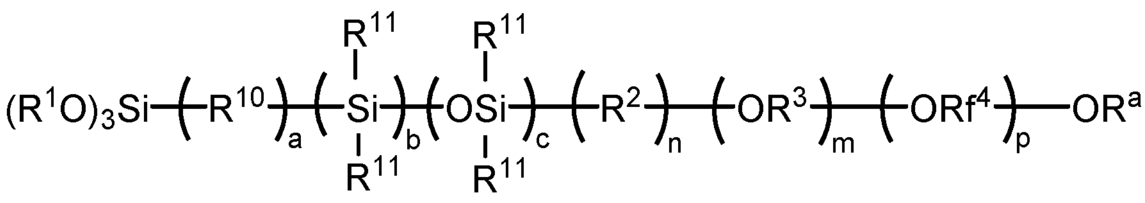

( 2 )

in which

$R^a$ represents a reactive group,
$R^{10}$s each independently represent a divalent hydrocarbon group having 1 to 4 carbon atoms, a is 0 to 10,
$R^{11}$s each independently represent a monovalent hydrocarbon group having 1 to 4 carbon atoms or an alkoxy group having 1 to 4 carbon atoms, b is 0 to 10, c is 1 to 100,
$R^1$s each independently represent a monovalent hydrocarbon group having 1 to 6 carbon atoms,
$R^2$s each independently represent a divalent hydrocarbon group having 1 to 6 carbon atoms, n is 0 or 1,
$R^3$s each independently represent a divalent hydrocarbon group having 1 to 4 carbon atoms, m is 0 to 10,
$Rf^4$s each independently represent a divalent fluorinated hydrocarbon group having 1 to 4 carbon atoms, and p is 10 to 100.

**6.** The spectacle lens according to claim 1, wherein the reactive group is at least one selected from the group consisting of a hydroxy group, a vinyl group, a silyl group, an epoxy group, and an alkoxy group.

**7.** The spectacle lens according to claim 6, wherein the $R^a$ is a group represented by formula (a1):

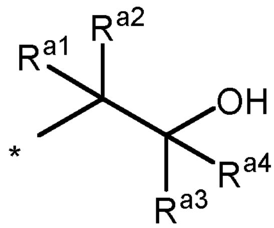

( a1 )

or
formula (a2):

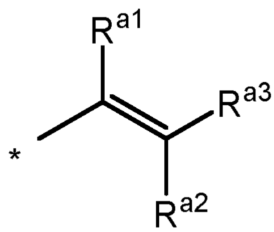

( a2 )

in which $R^{a1}$, $R^{a2}$, $R^{a3}$, and $R^{a4}$ each independently represent a hydrogen atom or an alkyl group having 1 to 3 carbon atoms.

**8.** The spectacle lens according to claim 5, wherein $(ORf^4)_p$ in formula (2) is a group represented by formula (f4-1):

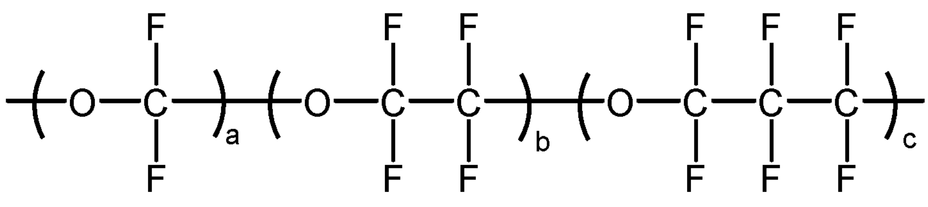

( f4-1 )

in which a is 0 to 100, b is 0 to 100, c is 0 to 100, and a + b + c is 10 to 200.

**9.** The spectacle lens according to any one of claims 1 to 8, wherein a total value of surface free energy of the antifouling layer is more than 10.0 mJ/m$^2$.

**10.** The spectacle lens according to any one of claims 1 to 8, wherein a base component of surface free energy of the antifouling layer is more than 0.95 mJ/m$^2$.

**11.** An antifouling agent composition comprising:

10 to 70 mass% of a compound (A) having a silyl group and a fluorinated alkyl group; and
30 to 90 mass% of a compound (B) having a silyl group at one end, a reactive group at the other end, and a polysiloxane chain structure.

**12.** A method for manufacturing a spectacle lens, the method comprising a step of forming an antifouling layer on a spectacle lens with an antifouling agent composition comprising:

a compound (A) having a silyl group and a fluorinated alkyl group; and
a compound (B) having a silyl group at one end, a reactive group at the other end, and a silyloxy chain site.

[Figure 1]

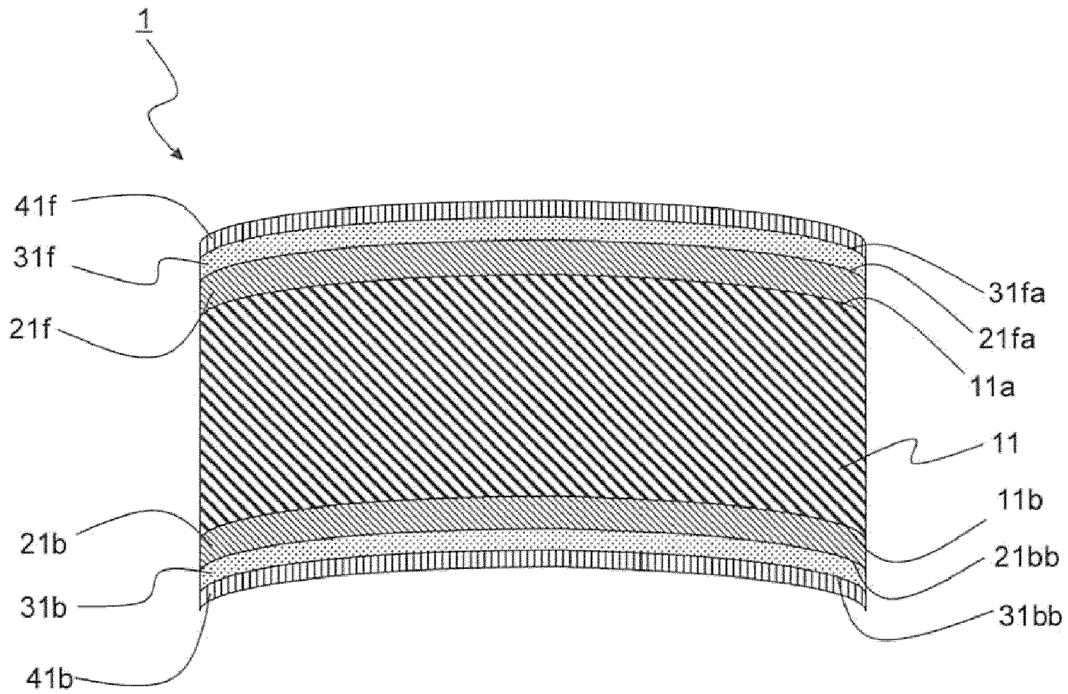

## INTERNATIONAL SEARCH REPORT

International application No. **PCT/JP2022/036083**

**A. CLASSIFICATION OF SUBJECT MATTER**

***G02C 7/00***(2006.01)i; ***C08L 71/00***(2006.01)i; ***G02B 1/18***(2015.01)i
FI: G02C7/00; G02B1/18; C08L71/00 Y

According to International Patent Classification (IPC) or to both national classification and IPC

**B. FIELDS SEARCHED**

Minimum documentation searched (classification system followed by classification symbols)

G02C7/00; C08L71/00; G02B1/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-036818 A (KONICA MINOLTA OPTO INCORPORATED) 19 February 2009 (2009-02-19) paragraphs [0100], [0212], [0473]-[0552], fig. 1 | 1-2, 11-12 |
| Y | paragraphs [0100], [0212], [0473]-[0552], fig. 1 | 3-10 |
| Y | JP 2020-204736 A (HOYA LENS THAILAND LIMITED) 24 December 2020 (2020-12-24) paragraphs [0045], [0052] | 3-4 |
| Y | JP 2010-539534 A (ESSILOR INTERNATIONAL (COMPAGNIE GENERALE D'OPTIQUE)) 16 December 2010 (2010-12-16) paragraphs [0032], [0049] | 3-4, 9-10 |
| Y | JP 2010-508541 A (ESSILOR INTERNATIONAL (COMPAGNIE GENERALE D'OPTIQUE)) 18 March 2010 (2010-03-18) paragraphs [0030], [0053] | 3-4, 9-10 |
| Y | WO 2020/241282 A1 (DAIKIN INDUSTRIES, LIMITED) 03 December 2020 (2020-12-03) paragraphs [0173], [0288]-[0314] | 5-8 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 December 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/036083**

**C. DOCUMENTS CONSIDERED TO BE RELEVANT**

| Category* | Citation of document, with indication, where appropriate, of the relevant passages | Relevant to claim No. |
|---|---|---|
| Y | JP 2013-014762 A (XEROX CORPORATION) 24 January 2013 (2013-01-24) paragraph [0095] | 10 |
| A | WO 2021/090111 A1 (3M INNOVATIVE PROPERTIES COMPANY) 14 May 2021 (2021-05-14) whole document | 1-12 |

Form PCT/ISA/210 (second sheet) (January 2015)

**INTERNATIONAL SEARCH REPORT**
**Information on patent family members**

International application No.
**PCT/JP2022/036083**

| Patent document cited in search report | Publication date (day/month/year) | Patent family member(s) | Publication date (day/month/year) |
|---|---|---|---|
| JP 2009-036818 A | 19 February 2009 | (Family: none) | |
| JP 2020-204736 A | 24 December 2020 | (Family: none) | |
| JP 2010-539534 A | 16 December 2010 | US 2010/0200541 A1<br>paragraphs [0044], [0072]<br>WO 2009/047426 A2<br>EP 2188667 A2<br>FR 2921161 A1<br>AU 2008309501 A<br>CA 2699645 A1<br>KR 10-2010-0054151 A<br>CN 101855589 A | |
| JP 2010-508541 A | 18 March 2010 | US 2010/0053547 A1<br>paragraphs [0060], [0135]<br>WO 2008/053020 A1<br>EP 2078224 A1<br>FR 2907915 A1 | |
| WO 2020/241282 A1 | 03 December 2020 | US 2022/0081574 A1<br>paragraphs [0192], [0423]-[0462]<br>EP 3978546 A1<br>KR 10-2021-0134685 A<br>CN 113728034 A<br>TW 202104351 A | |
| JP 2013-014762 A | 24 January 2013 | US 8247142 B1<br>paragraph [0032]<br>DE 102012210395 A1<br>CN 102850934 A<br>CA 2781330 A1<br>KR 10-2013-0004159 A | |
| WO 2021/090111 A1 | 14 May 2021 | KR 10-2022-0098161 A<br>TW 202128849 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018004921 A